# FASCICULE DE BREVET EUROPEEN

(11) **EP 3 510 104 B1**
(45) Date de publication et mention de la délivrance du brevet: **28.07.2021**
(21) Numéro de dépôt: 17768845.4
(22) Date de dépôt: 05.09.2017
(51) Int. Cl.: C08L 95/00

(54) **BITUME SOLIDE A TEMPERATURE AMBIANTE**
BEI RAUMTEMPERATUR FESTES BITUMEN
SOLIDE BITUME AT ROOM TEMPERATURE

(30) Priorité: 08.09.2016 FR 1658337
(43) Date de publication de la demande: 17.07.2019
(73) Titulaire: Total Marketing Services, 92800 Puteaux (FR)
(72) Inventeur: MOUAZEN, Mouhamad, 92000 Nanterre (FR)
(74) Mandataire: Corizzi, Valérie
(86) Numéro de dépôt international: PCT/FR2017/052348
(87) Numéro de publication internationale: WO 2018/046839

(56) Documents cités:
- EP-A1- 2 868 680
- WO-A1-2016/016318
- FR-A1- 2 998 896

## Description

### Domaine technique

La présente invention a pour objet des granules de bitume, solides à température ambiante, notamment à température ambiante élevée. La présente invention concerne également un procédé de préparation de ces granules ainsi que leur utilisation comme liant routier, notamment pour la fabrication d'enrobés.

La présente invention concerne également un procédé de fabrication d'enrobés à partir des granules de bitume selon l'invention ainsi qu'un procédé de transport et/ou de stockage et/ou de manipulation de ces granules de bitume à température ambiante, notamment à température ambiante élevée.

### Etat de l'art

La grande majorité du bitume est utilisée en construction, principalement pour la fabrication de chaussées routières ou dans l'industrie, par exemple pour des applications de toiture. Il se présente généralement sous la forme d'un matériau noir fortement visqueux, voire solide à température ambiante, qui se fluidifie en chauffant.

De manière générale, le bitume est stocké et transporté à chaud, en vrac, dans des camions-citernes ou par bateaux à des températures élevées de l'ordre de 120°C à 160°C. Or, le stockage et le transport du bitume à chaud présente certains inconvénients. D'une part, le transport du bitume à chaud sous forme liquide est considéré comme dangereux et il est très encadré d'un point de vue règlementaire. Ce mode de transport ne présente pas de difficultés particulières lorsque les équipements et les infrastructures de transport sont en bon état. Dans le cas contraire, il peut devenir problématique : si le camion-citerne n'est pas suffisamment calorifugé, la viscosité du bitume pourra augmenter durant un trajet trop long. Les distances de livraison du bitume sont donc limitées. D'autre part, le maintien du bitume à des températures élevées dans les cuves ou dans les camions-citernes consomme de l'énergie. En outre, le maintien du bitume à des températures élevées pendant une longue période peut affecter les propriétés du bitume et ainsi changer les performances finales de l'enrobé.

Pour pallier les problèmes du transport et du stockage du bitume à chaud, des conditionnements permettant le transport et le stockage des bitumes à température ambiante ont été développés. Ce mode de transport du bitume en conditionnement à température ambiante ne représente qu'une fraction minime des quantités transportées dans le monde, mais il correspond à des besoins bien réels pour les régions géographiques d'accès difficile et coûteux par les moyens de transport traditionnels.

A titre d'exemple de conditionnement permettant le transport à froid utilisé actuellement, on peut citer le conditionnement du bitume à température ambiante dans des fûts métalliques. Ce moyen est de plus en plus contestable d'un point de vue environnemental car le bitume stocké dans les fûts doit être réchauffé avant son utilisation comme liant routier. Or, cette opération est difficile à mettre en œuvre pour ce type de conditionnement et les fûts constituent un déchet après utilisation. D'autre part, le stockage du bitume à température ambiante dans des fûts conduit à des pertes car le bitume est très visqueux et une partie du produit reste sur les parois du fût lors du transvasement dans les cuves des unités de production des enrobés. Quant à la manipulation et au transport de produits bitumineux dans ces fûts, ils peuvent s'avérer difficiles et dangereux si l'équipement spécialisé de manutention des fûts n'est pas disponible chez les transporteurs ou sur le lieu d'utilisation du bitume.

A titre d'autres exemples de conditionnement, on peut citer les bitumes sous forme de granules transportés et/ou stockés dans des sacs, souvent utilisés dans des endroits où la température ambiante est élevée. Ces granules présentent l'avantage d'être facilement manipulables. US 3 026 568 décrit des granules de bitume recouverts d'un matériau poudreux, tel que de la poudre de calcaire. Néanmoins, ce type de bitume en granules n'empêche pas le fluage du bitume, notamment à température ambiante élevée.

La demande WO 2009/153324 décrit des granules de bitume enrobées par un composé anti-agglomérant polymérique, en particulier du polyéthylène. L'inconvénient de cet enrobage est qu'il modifie les propriétés du bitume lors de son application routière.

La demande WO 2016/016318 décrit des granules de bitume comprenant un additif chimique. Ces granules de bitume permettent le transport et/ou le stockage et/ou la manipulation du bitume à température ambiante sans que celui-ci ne flue, ainsi que la réduction de leur adhésion et agglomération entre eux.

Dans la continuité de ses travaux, la Demanderesse a découvert de manière surprenante une nouvelle composition de granules de bitume permettant d'éviter et de réduire l'adhésion et l'agglomération lors de leur transport et/ou stockage et/ou manipulation du bitume, à température ambiante élevée, sur des longues périodes et dont les propriétés du bitume sont conservées au cours du temps par rapport aux granules de l'art antérieur.

Plus précisément, la Demanderesse a mis en évidence que cette nouvelle composition de granules de bitume permet de résister au fluage dans des conditions extrêmes de transport et/ou de stockage et/ou de manipulation, dans des conditions de compression, notamment dues au stockage, sur des périodes très longues.

### Résumé de l'invention

L'invention a pour objet des granules de bitume comprenant un cœur et une couche de revêtement dans lesquels :
- le cœur comprend au moins une base bitume et,
- la couche de revêtement comprend au moins un composé de silice pyrogénée.

L'invention concerne encore un procédé de fabrication de granules de bitume composées d'un cœur et d'une couche de revêtement du cœur, ce procédé comprenant :
i) la mise en forme du cœur à partir d'au moins une base bitume,
ii) le poudrage ou l'enrobage du cœur sur tout ou partie de sa surface respectivement par un composé de silice pyrogénée ou par une composition comprenant au moins un composé de silice pyrogénée,
iii) optionnellement, le séchage des granules obtenues à l'étape ii) à une température allant de 20 à 60 °C, pendant une durée allant de 5 minutes à 5 heures, de préférence de 5 minutes à 2 heures.

L'invention concerne également des granules de bitumes susceptibles d'être obtenus par la mise en œuvre de ce procédé.

Selon un mode de réalisation de l'invention, le composé de silice pyrogénée présente une surface spécifique comprise entre 25 et 420 m²/g, préférentiellement entre 90 et 330 m²/g, plus préférentiellement entre 120 et 280 m²/g.

Selon un mode de réalisation de l'invention, le composé de silice pyrogénée présente une taille moyenne de particules comprise entre 5 et 50 nm.

Selon un mode de réalisation de l'invention, le composé de silice pyrogénée présente un pH compris entre 3 et 10 lorsqu'il est en phase aqueuse.

Selon un mode de réalisation de l'invention, le composé de silice pyrogénée présente une teneur en carbone comprise entre 0,1 et 10% en poids par rapport au poids total du composé de silice pyrogénée.

Selon un mode de réalisation de l'invention, le composé de silice pyrogénée est une silice pyrogénée.

Selon un mode de réalisation de l'invention, le composé de silice pyrogénée est choisi parmi un composé de silice pyrogénée hydrophile, un composé de silice pyrogénée hydrophobe et leurs mélanges.

De préférence, le composé de silice pyrogénée est un composé de silice pyrogénée hydrophile.

Selon un mode de réalisation de l'invention, la couche de revêtement peut comprendre en outre au moins un composé anti-agglomérant.

De préférence, le composé anti-agglomérant est choisi parmi : le talc ; les fines généralement de diamètre inférieur à 125 µm, telles que les fines silicieuses, à l'exception des fines calcaires ; le sable, tel que le sable de fontainebleau ; le ciment ; le carbone ; les résidus de bois tels que la lignine, le lignosulfonate, les poudres d'aiguilles de conifères, les poudres de cônes de conifères, notamment le pin ; les cendres de balles de riz ; la poudre de verre ; les argiles telles que le kaolin, la bentonite, la vermiculite ; l'alumine telle que les hydrates d'alumine ; la silice ; les dérivés de silice tels que les silicates, les hydroxydes de silicium et les oxydes de silicium ; la poudre de matière plastique; la chaux, le plâtre ; la poudre de caoutchouc ; la poudre de polymères, tels que les copolymères styrène-butadiène (SB), les copolymères styrène-butadiène-styrène (SBS) ; et leurs mélanges.

Selon un mode de réalisation de l'invention, la base bitume présente une pénétrabilité à l'aiguille mesurée à 25°C selon la norme EN 1426 de 5 à 330 1/10 mm, de préférence de 20 à 220 1/10 mm.

Selon un mode de réalisation de l'invention, la base bitume comprend en outre au moins un additif chimique choisi parmi : un composé organique, une paraffine, un acide polyphosphorique et leurs mélanges.

Selon un mode de réalisation de l'invention, la base bitume présente une pénétrabilité de 5 à 45 1/10mm, mesurée à 25°C selon la norme EN 1426 et/ou une température de ramollissement bille et anneau supérieure ou égale à 90°C, la température de ramollissement bille et anneau étant mesurée selon la norme EN 1427.

Selon un mode de réalisation préféré, les granules de bitume présentent une stabilité au transport et/ou au stockage et/ou à la manipulation à une température allant jusqu'à 100°C, avantageusement de 20°C à 90°C, de préférence de 20°C à 80°C, plus préférentiellement de 40°C à 80°C, encore plus préférentiellement de 40°C à 60°C, pendant une durée supérieure ou égale à 2 mois, de préférence supérieure ou égale à 3 mois.

L'invention concerne également l'utilisation des granules de bitume définies ci-dessus comme liant routier.

Selon un mode de réalisation préféré, l'utilisation concerne la fabrication d'enrobés.

L'invention concerne encore un procédé de fabrication d'enrobés comprenant au moins un liant routier et des granulats, le liant routier étant choisi parmi les granules de bitume définies ci-dessus, ce procédé comprenant au moins les étapes de :
- chauffage des granulats à une température allant de 100°C à 180°C, de préférence de 120°C à 160°C,
- mélange des granulats avec le liant routier dans une cuve telle qu'un malaxeur ou un tambour malaxeur,
- obtention d'enrobés.

Selon un mode de réalisation préféré, le procédé de fabrication d'enrobés ne comporte pas d'étape de chauffage du liant routier avant son mélange avec les granulats.

L'invention concerne enfin un procédé de transport et/ou de stockage et/ou de manipulation de bitume routier, ledit bitume routier étant transporté et/ou stocké et/ou manipulé sous forme granules de bitume telles que définies ci-dessus.

### Description détaillée

Les objectifs que la demanderesse s'est fixés ont été atteints grâce à la mise au point de compositions de bitume sous une forme divisée, présentant une structure cœur/enveloppe, dans laquelle le cœur est à base de bitume et la couche de revêtement confère à la structure globale des propriétés améliorées dans des conditions extrêmes de transport et/ou de stockage et/ou de manipulation par rapport aux granules de bitumes connues de l'art antérieur.

Un premier objet de l'invention concerne des granules de bitume comprenant un cœur et une couche de revêtement dans lequel :
- le cœur comprend au moins une base bitume et,
- la couche de revêtement comprend au moins un composé de silice pyrogénée.

Par « température ambiante élevée », on entend la température résultante des conditions climatiques dans lesquelles est transporté et/ou stocké et/ou manipulé le bitume routier. Plus précisément, la température ambiante élevée équivaut à la température atteinte lors du transport et/ou du stockage du bitume routier étant inférieure à 100°C. Avantageusement, la température ambiante élevée est de 20°C à 90°C, de préférence de 20°C à 80°C, plus préférentiellement de 40°C à 80°C, encore plus préférentiellement de 40°C à 60°C, étant entendu que la température ambiante élevée implique qu'aucun apport de chaleur n'est apporté autre que celui résultant des conditions climatiques.

Par « conditions extrêmes », on entend les conditions de transport et/ou de stockage et/ou de manipulation du bitume routier avec une température de transport et/ou de stockage et/ou de manipulation du bitume routier allant jusqu'à 100°C, avantageusement, de 20°C à 90°C, de préférence de 20°C à 80°C, plus préférentiellement de 40°C à 80°C, encore plus préférentiellement de 40°C à 60°C.

L'invention concerne des bitumes susceptibles d'être solide lorsqu'ils sont soumis à des températures ambiantes élevées, en particulier une température allant jusqu'à 100°C, avantageusement, de 20°C à 90°C, de préférence de 20°C à 80°C, plus préférentiellement de 40°C à 80°C, encore plus préférentiellement de 40°C à 60°C.

Par « bitume solide à température ambiante élevée», on entend un bitume présentant un aspect solide à température ambiante élevée dans des conditions de transport et/ou de stockage et/ou de manipulation. Plus précisément, on entend par bitume solide à température ambiante élevée, un bitume qui conserve son aspect solide tout au long du transport et/ou du stockage et/ou de la manipulation à température ambiante élevée, c'est-à-dire un bitume qui ne flue pas à une température allant jusqu'à 100°C, avantageusement, de 20°C à 90°C, de préférence de 20°C à 80°C, plus préférentiellement de 40°C à 80°C, encore plus préférentiellement de 40°C à 60°C,sous son propre poids et de plus, qui ne flue pas lorsqu'il est soumis à une température allant jusqu'à 100°C, avantageusement, de 20°C à 90°C, de préférence de 20°C à 80°C, plus préférentiellement de 40°C à 80°C, encore plus préférentiellement de 40°C à 60°C,et à des forces de pressions issues des conditions de transport et/ou de stockage et/ou de manipulation.

Par « couche de revêtement recouvrant tout en partie de la surface du cœur », on entend que la couche de revêtement recouvre au moins 90% de la surface du cœur, de préférence au moins 95% de la surface du cœur, plus préférentiellement au moins 99% de la surface du cœur.

L'expression « consiste essentiellement en » suivie d'une ou plusieurs caractéristiques, signifie que peuvent être inclus dans le procédé ou le matériau de l'invention, outre les composants ou étapes explicitement énumérés, des composants ou des étapes qui ne modifient pas significativement les propriétés et caractéristiques de l'invention.

L'expression « compris entre X et Y » inclut les bornes. Cette expression signifie donc que l'intervalle visé comprend les valeurs X, Y et toutes les valeurs allant de X à Y.

### - le composé de silice pyrogénée

Par « composé de silice pyrogénée », on entend, soit une silice pyrogénée, soit un dérivé de silice pyrogénée.

Par « silice pyrogénée », on entend un composé obtenu par l'hydrolyse en phase vapeur de chlorosilanes tels que le tétrachlorure de silicium, dans une flamme d'oxygène et d'hydrogène. De tels procédés sont généralement désignés comme des procédés pyrogènes dont la réaction globale est : SiCl₄ + H2 + O₂ → SiO₂ + 4 HCl.

Au sens de l'invention, les composés « silice pyrogénée », et « fumée de silice » ont la même définition chimique et sont enregistrés sous le même numéro CAS 112 945-52-5. Par conséquent, au sens de l'invention on peut employer ces composés indifféremment l'un de l'autre.

Les silices pyrogénées se distinguent des autres dioxydes de silicium en ce qu'elles présentent une structure amorphe. De haute pureté (> 99,8 % en silice), elles présentent un faible caractère hydrophile (pas de microporosité).

De préférence, le composé de silice pyrogénée est la silice pyrogénée.

Selon un mode de réalisation de l'invention, le composé de silice pyrogénée présente une surface spécifique comprise entre 25 et 420 m²/g, préférentiellement entre 90 et 330 m²/g, plus préférentiellement entre 120 et 280 m²/g.

La surface spécifique de la silice pyrogénée définie en m²/g communément appelée « aire de surface » ou « SA » est mesurée selon la méthode de S. Brunauer, PH Emmet et I. Teller, J. Am. Chemical Society, 60: 309 (1938) (BET).

Selon un mode de réalisation de l'invention, le composé de silice pyrogénée présente une taille moyenne de particules comprise entre 5 et 50 nm.

Selon un mode de réalisation de l'invention, le composé de silice pyrogénée présente un pH compris entre 3 et 10 lorsqu'il est en phase aqueuse.

Selon un mode de réalisation de l'invention, le composé de silice pyrogénée présente une teneur de carbone compris entre 0,1 et 10% en poids par rapport au poids total du composé de silice pyrogénée.

Selon un mode de réalisation de l'invention, le composé de silice pyrogénée est choisi parmi un composé de silice pyrogénée hydrophile, un composé de silice pyrogénée hydrophobe et leurs mélanges.

De préférence, le composé de silice pyrogénée est un composé de silice pyrogénée hydrophile.

Par « hydrophile », on entend un composé qui est miscible avec l'eau en toutes proportions.

Le composé de silice pyrogénée, ou dérivé de silice pyrogénée, utilisé au sens de l'invention peut être chimiquement modifié.

Différents types de composés de silice pyrogénée sont décrits dans les demandes de brevets suivants et peuvent être utilisés dans la présente invention :
- des silices pyrogénées silanisées, comme décrit dans WO 2004/020532, ou dans WO 2007/128636,
- des silices pyrogénées hydrophiles, comme décrit dans WO 2009/071467, WO 2011/000133 déposés au nom de Degussa AG ou Degussa Gmbh,
- des fumées de silice rendues hydrophobes par un traitement au moyen de polysiloxanes comme décrit dans WO 2008/141932, ou par silanisation comme décrit dans WO 2008/141930,
- des silices dopées par de l'oxyde de potassium comme décrit dans WO 2008/043635, WO 2008/022836,
- des silices sous forme d'agrégats de particules primaires comme décrit dans WO 2009/015969 déposé au nom de Evonik Degussa Gmbh ou dans WO 2010/028261 déposé au nom de Cabot Corporation

Le composé de silice pyrogénée peut être mis en œuvre seul ou sous forme d'un mélange au sein d'une composition de revêtement.

Qu'il soit mis en œuvre seul ou en mélange dans une composition, le composé de silice pyrogénée peut être mis en œuvre dans le procédé de production des granules enrobés sous la forme d'une poudre ou en dispersion dans un solvant qui s'évapore après application.

De préférence, lorsque la composition comprend au moins un composé de silice pyrogénée et au moins un solvant, la composition comprend de 5 à 70% en poids de composé de silice pyrogénée par rapport au poids total de la composition, plus préférentiellement de 20 à 40% en poids.

De préférence, le solvant est un solvant organique ou de l'eau. Par solvant organique, on entend tout solvant non miscible avec un bitume, tel qu'un alcool, par exemple l'éthanol.

Les composés de silice pyrogénée utilisés dans l'invention sont commercialement disponibles et par exemple peuvent être vendus par Evonik Degussa sous la marque AEROSIL®, comme par exemple l'AEROSIL®200, par Cabot Corporation sous les marques CAB-O-SIL® et CAB-O-SPERSE® ou encore par Wacker Chemie AG sous la marque HDK®.

Selon un mode de réalisation de l'invention, la masse du composé de silice pyrogénée recouvrant au moins une partie de la surface des granules est comprise entre 0,2% et 10% en masse, de préférence entre 0,5% et 8% en masse, plus préférentiellement entre 0,5% et 5% par rapport à la masse totale de bitume desdites granules.

Les granules de bitume sont recouvertes du composé de silice pyrogénée selon tout procédé connu, par exemple selon le procédé décrit dans le document US 3 026 568.

Selon un mode de réalisation de l'invention, le cœur des granules comprend en outre au moins un composé de silice pyrogénée tel que défini ci-dessus.

De préférence, le cœur des granules de bitume comprend en outre entre 0,5% et 20% en masse, de préférence entre 2% et 20% en masse, plus préférentiellement entre 4% et 15% en masse du composé de silice pyrogénée par rapport à la masse totale de bitume du cœur desdites granules.

Dans ce mode de réalisation, le cœur des granules de bitume est préparé à partir de bitume routier, ledit bitume routier étant préparé en mettant en contact :
- une ou plusieurs bases bitumes,
- entre 0,1% et 5% en masse, de préférence entre 0,5% et 4% en masse, plus préférentiellement entre 0,5% et 2,8% en masse, et encore plus préférentiellement entre 0,5% et 2,5% en masse d'un additif chimique par rapport à la masse totale de bitume du cœur desdites granules, et
- entre 0,5% et 20% en masse, de préférence entre 2% et 20% en masse, plus préférentiellement entre 4% et 15% en masse de composé de silice pyrogénée par rapport à la masse totale de bitume du cœur desdites granules.

### - Les autres composés anti-agglomérants :

Lorsqu'ils sont présents, les autres composés anti-agglomérants sont d'origine minérale ou organique. Par « anti-agglomérant » ou « composé anti-agglomérant », on entend tout composé qui limite, réduit, inhibe, retarde, l'agglomération et/ou l'adhésion des granules entre eux lors de leur transport et/ou de leur stockage à température ambiante élevée et qui assure leur fluidité lors de leur manipulation.

Plus préférentiellement, le composé anti-agglomérant est choisi parmi : le talc ; les fines, également appelées "fillers", généralement de diamètre inférieur à 125 µm, telles que les fines silicieuses, à l'exception des fines calcaires ; le sable tel que le sable de fontainebleau ; le ciment ; le carbone ; les résidus de bois tels que la lignine, le lignosulfonate, les poudres d'aiguilles de conifères, les poudres de cônes de conifères, notamment de pin ; les cendres de balles de riz ; la poudre de verre ; les argiles telles que le kaolin, la bentonite, la vermiculite ; l'alumine telle que les hydrates d'alumine ; la silice ; les dérivés de silice tels que les silicates, les hydroxydes de silicium et les autres oxydes de silicium ; la poudre de matière plastique ; la chaux ; le plâtre ; la poudre de caoutchouc ; la poudre de polymères, tels que les copolymères styrène-butadiène (SB), les copolymères styrène-butadiène-styrène (SBS) et les mélanges de ces matériaux.

Avantageusement, le composé anti-agglomérant est choisi parmi : les fines, généralement de diamètre inférieur à 125 µm ; les résidus de bois tels que la lignine, les poudres d'aiguilles de conifères et les poudres de cônes de conifères ; leurs mélanges.

Les granules de bitume sont recouvertes de l'anti-agglomérant selon tout procédé connu, par exemple selon le procédé décrit dans le document US 3 026 568.

### - La couche de revêtement :

Selon un mode de réalisation de l'invention, la couche de revêtement est obtenue par poudrage du cœur en bitume avec au moins un composé de silice pyrogénée sur tout ou partie de la surface du cœur en bitume.

Selon un mode de réalisation alternatif de l'invention, la couche de revêtement est obtenue par application d'une composition comprenant au moins un composé de silice pyrogénée et au moins un solvant sur tout ou partie de la surface du cœur en bitume.

Dans ce mode de réalisation, la couche de revêtement est solide à température ambiante élevée, notamment à une température supérieure à 60°C.

Selon un mode de réalisation de l'invention, l'épaisseur moyenne de la couche de revêtement est, de préférence, supérieure ou égale à 20 µm, plus préférentiellement comprise entre 20 et 100 µm. La couche de revêtement doit être suffisamment épaisse pour que celle-ci soit continue.

Outre le composé de silice pyrogénée, la couche de revêtement peut éventuellement comprendre un ou plusieurs composés choisis parmi : les additifs chimiques, les polymères,

Selon un mode de réalisation préféré, la couche de revêtement est essentiellement constituée du composé de silice pyrogénée.

Selon un mode de réalisation préféré, la couche de revêtement est essentiellement constituée de silice pyrogénée.

### - Les granules :

Au sens de l'invention, le terme « granules de bitume » peut également être défini comme un bitume solide à température ambiante conditionné sous une forme divisée, c'est-à-dire sous forme d'unités de petite taille nommées granules ou particules, comportant un cœur à base de bitume et une enveloppe ou coque ou enrobage ou couche de revêtement ou revêtement.

De préférence, les granules de bitume selon l'invention peuvent avoir au sein d'une même population de granules, une ou plusieurs formes choisies parmi une forme cylindrique, sphérique ou ovoïde. La taille des granules de bitume est telle que la dimension moyenne la plus longue est de préférence inférieure ou égale à 50 mm, plus préférentiellement de 3 à 30 mm, encore plus préférentiellement comprise de 5 à 20 mm. La taille et la forme des granules de bitume peuvent varier selon le procédé de fabrication employé. Par exemple, l'utilisation d'une filière permet de contrôler la fabrication de granules d'une taille choisie. Un tamisage permet de sélectionner des granules en fonction de leur taille.

De préférence, les granules de bitume selon l'invention présentent un poids compris entre 0,1 g et 50 g, de préférence entre 0,2 g et 10 g, plus préférentiellement entre 0,2 g et 5 g.

Sans être liée à la théorie, la Demanderesse a découvert de manière inattendue que l'utilisation d'un composé de silice pyrogénée selon l'invention permet d'obtenir une couche de revêtement :
- qui est résistante aux conditions climatiques et aux conditions de transport et/ou de stockage du bitume routier solide extrêmes,
- qui se casse facilement sous un effet de cisaillement mécanique, comme par exemple sous l'effet d'un cisaillement mécanique appliqué dans une cuve telle qu'un malaxeur ou un tambour-malaxeur lors de la fabrication d'enrobés.

Plus particulièrement, la couche de revêtement résiste au transport et/ou au stockage du bitume à température ambiante élevée, notamment à une température supérieure à 60°C, dans des « Big Bags » tout en étant cassante sous l'effet d'un cisaillement mécanique. Elle permet ainsi la libération du cœur en bitume lors de la fabrication d'enrobés.

Selon un mode de réalisation de l'invention, les granules de bitume peuvent comprendre en outre une ou plusieurs autres couches de revêtement, à base d'un composé de silice pyrogénée et optionnellement d'un ou plusieurs autres anti-agglomérants recouvrant tout ou en partie la couche de revêtement du bitume solide selon l'invention.

### - La base bitume

Avantageusement, le noyau ou cœur des granules de bitume solide selon l'invention est préparé à partir de bitume routier, ledit bitume routier étant préparé en mettant en contact :
- une ou plusieurs bases bitumes, et
- éventuellement au moins un additif chimique.

Au sens de l'invention, les termes « bitume » et « bitume routier » sont utilisés, de manière équivalente et indépendamment l'un de l'autre. Par « bitume » ou « bitume routier », on entend toutes compositions bitumineuses constituées d'une ou de plusieurs bases bitumes et comprenant éventuellement un ou plusieurs additifs chimiques, lesdites compositions étant destinées à une application routière.

Parmi les bases bitumes utilisables selon l'invention, on peut citer tout d'abord les bitumes d'origine naturelle, ceux contenus dans des gisements de bitume naturel, d'asphalte naturel ou les sables bitumineux et les bitumes provenant du raffinage du pétrole brut. Les bases bitumes selon l'invention sont avantageusement choisies parmi les bases bitumes provenant du raffinage du pétrole brut. Les bases bitumes peuvent être choisies parmi les bases bitumes ou mélanges de bases bitumes provenant du raffinage du pétrole brut, en particulier des bases bitumes contenant des asphaltènes ou des brais. Les bases bitumes peuvent être obtenues par des procédés conventionnels de fabrication des bases bitumes en raffinerie, en particulier par distillation directe et/ou distillation sous vide du pétrole. Ces bases bitumes peuvent être éventuellement viscoréduites et/ou désasphaltées et/ou rectifiées à l'air. Il est courant de procéder à la distillation sous vide des résidus atmosphériques provenant de la distillation atmosphérique de pétrole brut. Ce procédé de fabrication correspond, par conséquent, à la succession d'une distillation atmosphérique et d'une distillation sous vide, la charge alimentant la distillation sous vide correspondant aux résidus atmosphériques. Ces résidus sous vide issus de la tour de distillation sous vide peuvent être également utilisés comme bitumes. Il est également courant d'injecter de l'air dans une charge composée habituellement de distillats et de produits lourds provenant de la distillation sous vide de résidus atmosphériques provenant de la distillation du pétrole. Ce procédé permet d'obtenir une base soufflée, ou semi-soufflée ou oxydée ou rectifiée à l'air ou rectifiée partiellement à l'air.

Les différentes bases bitumes obtenues par les procédés de raffinage peuvent être combinées entre elles pour obtenir le meilleur compromis technique. La base bitume peut aussi être une base bitume de recyclage. Les bases bitumes peuvent être des bases bitumes de grade dur ou de grade mou.

Selon l'invention, pour les procédés conventionnels de fabrication des bases bitumes, on opère à des températures de fabrication comprises entre 100°C et 200°C, de préférence entre 140°C et 200°C, plus préférentiellement entre 140°C et 170°C, et sous agitation pendant une durée d'au moins 10 minutes, de préférence comprise entre 30 minutes et 10 heures, plus préférentiellement entre 1 heure et 6 heures. On entend par température de fabrication, la température de chauffage de la ou des bases bitumes avant mélange ainsi que la température de mélange. La température et la durée du chauffage varient selon la quantité de bitume utilisée et sont définies par la norme NF EN 12594.

Selon l'invention, les bitumes soufflés peuvent être fabriqués dans une unité de soufflage, en faisant passer un flux d'air et/ou d'oxygène à travers une base bitumineuse de départ. Cette opération peut être menée en présence d'un catalyseur d'oxydation, par exemple de l'acide phosphorique. Généralement, le soufflage est réalisé à des températures élevées, de l'ordre de 200 à 300°C, pendant des durées relativement longues typiquement comprises entre 30 minutes et 2 heures, en continu ou par lots. La durée et la température de soufflage sont ajustées en fonction des propriétés visées pour le bitume soufflé et en fonction de la qualité du bitume de départ.

Préférentiellement, la base bitume mise en œuvre pour fabriquer les granules de l'invention présente une pénétrabilité à l'aiguille mesurée à 25°C selon la norme EN 1426 de 5 à 330 1/10 mm, de préférence de 20 à 220 1/10 mm.

De manière bien connue, la mesure dite de « pénétrabilité à l'aiguille » est réalisée au moyen d'un test normalisé NF EN 1426 à 25°C (P₂₅). Cette caractéristique de pénétrabilité est exprimée en dixièmes de millimètre (dmm ou 1/10 mm). La pénétrabilité à l'aiguille, mesurée à 25°C, selon le test normalisé NF EN 1426, représente la mesure de la pénétration dans un échantillon de bitume, au bout d'un temps de 5 secondes, d'une aiguille dont le poids avec son support est de 100 g. La norme NF EN 1426 remplace la norme homologuée NF T 66-004 de décembre 1986 avec effet au 20 décembre 1999 (décision du Directeur Général d'AFNOR en date du 20 novembre 1999).

### - L'additif chimique

La base bitume peut en outre comprendre au moins un additif chimique choisi parmi : un composé organique, une paraffine, un acide polyphosphorique et leurs mélanges.

En particulier, lorsque le bitume solide comprend au moins un additif chimique, la pénétrabilité visée pour la base bitume additivée est de préférence de 5 à 45 1/10mm et/ou la température de ramollissement bille et anneau (TBA) visée est, de préférence, supérieure ou égale à 90°C, étant entendu que la pénétrabilité est mesurée à 25°C selon la norme EN 1426 et la TBA selon la norme EN 1427.

Selon un premier mode de réalisation de l'invention, l'additif chimique est un composé organique. Avantageusement, le composé organique présente une masse molaire inférieure ou égale à 2000 gmol⁻¹, de préférence une masse molaire inférieure ou égale à 1000 gmol⁻¹.

Dans ce premier mode de réalisation, selon une première variante, le composé organique est un composé de formule générale (I) :

Ar1-R-Ar2 (I),

dans laquelle :
- Ar1 et Ar2 représentent indépendamment l'un de l'autre un noyau benzène ou un système de noyaux aromatiques condensés de 6 à 20 atomes de carbones, substitués par au moins un groupe hydroxyle, et
- R représente un radical divalent éventuellement substitué, dont la chaîne principale comprend de 6 à 20 atomes de carbone et au moins un groupe choisi parmi les fonctions amide, ester, hydrazide, urée, carbamate, anhydride.

De préférence, Ar1 et/ou Ar2 sont substitués par au moins un groupe alkyle de 1 à 10 atomes de carbone, avantageusement en une ou des positions *ortho* par rapport au(x) groupe(s) hydroxyle(s), plus préférentiellement Ar1 et Ar2 sont des groupes 3,5-dialkyl-4-hydroxyphényle, avantageusement des groupes 3,5-di-*tert*-butyl-4-hydroxyphényle.

De préférence, R est en position *para* par rapport à un groupe hydroxyle de Ar1 et/ou Ar2.

Avantageusement, le composé de formule (I) est le 2',3-bis[(3-[3, 5-di-*tert*-butyl-4-hydroxyphenyl]propionyl)]propionohydrazide.

Selon une seconde variante de ce premier mode de réalisation, le composé organique est un composé de formule générale (II) :

R-(NH)ₙCONH-(X)ₘ-NHCO(NH)ₙ-R' (II),

dans laquelle,
- les groupements R et R', identiques ou différents, contiennent une chaîne hydrocarbonée saturée ou insaturée, linéaire, ramifiée ou cyclique, comprenant de 1 à 22 atomes de carbone, éventuellement substituée, et comprenant éventuellement des hétéroatomes, des cycles et/ou des hétérocycles ;
- le groupement X contient une chaîne hydrocarbonée, saturée ou insaturée, linéaire, cyclique ou ramifiée, comprenant de 1 à 22 atomes de carbone, éventuellement substituée, et comprenant éventuellement des hétéroatomes, des cycles et/ou des hétérocycles ;
- n et m sont des entiers ayant une valeur de 0 ou 1 indépendamment l'un de l'autre.

Selon cette variante, lorsque l'entier m a une valeur de 0, alors les groupements R-(NH)ₙCONH et NHCO(NH)ₙ-R' sont liés de façon covalente par une liaison hydrazide CONH-NHCO. Le groupement R, ou le groupement R', comprend alors au moins un groupement choisi parmi : une chaîne hydrocarbonée d'au moins 4 atomes de carbone, un cycle aliphatique de 3 à 8 atomes, un système polycyclique condensé aliphatique, partiellement aromatique ou entièrement aromatique, chaque cycle comprenant 5 ou 6 atomes.

Toujours selon cette variante, lorsque l'entier m a une valeur de 1, alors le groupement R, le groupement R' et/ou le groupement X, comprend au moins un groupement choisi parmi : une chaîne hydrocarbonée d'au moins 4 atomes de carbone, un cycle aliphatique de 3 à 8 atomes, un système polycyclique condensé aliphatique, partiellement aromatique ou entièrement aromatique, chaque cycle comprenant 5 ou 6 atomes.

De préférence, le groupement R et/ou R' comprend une chaîne hydrocarbonée aliphatique de 4 à 22 atomes de carbone, notamment, choisie parmi les groupements C₄H₉, C₅H₁₁, C₉H₁₉, C₁₁H₂₃, C₁₂H₂₅, C₁₇H₃₅, C₁₈H₃₇, C₂₁H₄₃, C₂₂H₄₅.

De préférence, le groupement X représente une chaîne hydrocarbonée linéaire, saturée comprenant de 1 à 22 atomes de carbone. De préférence, le groupement X est choisi parmi les groupements C₂H₄, C₃H₆.

De préférence, le groupement X peut aussi être un groupement cyclohexyl ou un groupement phényl, les radicaux R-(NH)ₙCONH- et NHCO(NH)ₙ-R'- peuvent alors être en position ortho, méta ou para. Par ailleurs, les radicaux R-(NH)ₙCONH- et NHCO(NH)ₙ-R'-peuvent être en position cis ou trans l'un par rapport à l'autre. De plus, lorsque le radical X est cyclique, ce cycle peut être substitué par d'autres groupements que les deux groupements principaux R-(NH)ₙCONH- et -NHCO(NH)ₙ-R'.

De préférence, le groupement X comprend deux cycles de 6 carbones reliés par un groupement CH₂, ces cycles étant aliphatiques ou aromatiques. Dans ce cas, le groupement X est un groupement comportant deux cycles aliphatiques reliés par un groupement CH₂ éventuellement substitué comme par exemple:

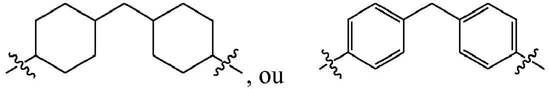

Avantageusement, selon cette variante, le composé organique est un composé de formule générale (II) choisi parmi les dérivés hydrazides tels que les composés C₅H₁₁-CONH-NHCO-C₅H₁₁, C₉H₁₉-CONH-NHCO-C₉H₁₉, C₁₁H₂₃-CONH-NHCO-C₁₁H₂₃, C₁₇H₃₅-CONH-NHCO-C₁₇H₃₅, ou C₂₁H₄₃-CONH-NHCO-C₂₁H₄₃ ; les diamides telles que la N,N'-éthylènedi(stéaramide) de formule C₁₇H₃₅-CONH-CH₂-CH₂-NHCO-C₁₇H₃₅; et les dérivés uréides tels que la 4,4'-bis(dodécylaminocarbonylamino)diphénylmethane de formule C₁₂H₂₅-NHCONH-C₆H₄-CH₂-C₆H₄-NHCONH-C₁₂H₂₅.

De préférence, le composé de formule générale (II) est choisi parmi ceux qui satisfont à la condition n = 0.

De préférence, le composé de formule générale (II) est choisi parmi ceux qui satisfont à la condition : la somme des nombres des atomes de carbone de R, X et R' est supérieur ou égal à 10, avantageusement supérieur ou égal à 14, de préférence supérieur ou égal à 18.

De préférence, le composé de formule générale (II) est choisi parmi ceux qui satisfont à la condition : le nombre des atomes de carbone de l'un au moins de R et R' est supérieur ou égal à 10, avantageusement supérieur ou égal à 12, de préférence supérieur ou égal à 14.

De préférence, selon une première variante, le composé de formule générale (II) est choisi parmi ceux de formule (IIA) :

R-CONH-(X)ₘ-NHCO-R' (IIA)

dans laquelle R, R', m et X ont la même définition que ci-dessus.

De préférence, dans la formule (IIA) lorsque m= 1, le groupement X représente une chaîne hydrocarbonée linéaire, saturée comprenant de 1 à 22 atomes de carbone, avantageusement X représente une chaîne hydrocarbonée linéaire, saturée comprenant de 1 à 12 atomes de carbone, encore mieux de 1 à 4 atomes de carbone. De préférence, le groupement X est choisi parmi les groupements C₂H₄, C₃H₆.

De préférence, le composé de formule générale (IIA) est choisi parmi ceux qui satisfont à la condition : la somme des nombres des atomes de carbone de R, X et R' est supérieur ou égal à 10, avantageusement supérieur ou égal à 14, de préférence supérieur ou égal à 18.

De préférence, le composé de formule générale (IIA) est choisi parmi ceux qui satisfont à la condition : le nombre des atomes de carbone de l'un au moins de R et R' est supérieur ou égal à 10, avantageusement supérieur ou égal à 12, de préférence supérieur ou égal à 14.

Plus préférentiellement, selon cette variante, le composé de formule générale (IIA) est choisi parmi les dérivés hydrazides tels que les composés C₅H₁₁-CONH-NHCO-C₅H₁₁, C₉H₁₉-CONH-NHCO-C₉H₁₉, C₁₁H₂₃-CONH-NHCO-C₁₁H₂₃, C₁₇H₃₅-CONH-NHCO-C₁₇H₃₅, ou C₂₁H₄₃-CONH-NHCO-C₂₁H₄₃ ; les diamides telles que le N,N'-éthylènedi(laurylamide) de formule C₁₁H₂₃-CONH-CH₂-CH₂-NHCO-C₁₁H₃₁, le N,N'-éthylènedi(myristylamide) de formule C₁₃H₂₇-CONH-CH₂-CH₂-NHCO-C₁₃H₂₇, le N,N'-éthylènedi(palmitamide) de formule C₁₅H₃₁-CONH-CH₂-CH₂-NHCO-C₁₅H₃₁, le N,N'-éthylènedi(stéaramide) de formule C₁₇H₃₅-CONH-CH₂-CH₂-NHCO-C₁₇H₃₅ ; les mono amides telles que le laurylamide de formule C₁₁H₂₃-CONH₂, le myristylamide de formule C₁₃H₂₇-CONH₂, le palmitamide de formule C₁ₛH₃₁-CONH₂, le stéaramide de formule C₁₇H₃₅-CONH₂.

De façon encore plus avantageuse, le composé de formule générale (IIA) est le N,N'-éthylènedi(stéaramide) de formule C₁₇H₃₅-CONH-CH₂-CH₂-NHCO-C₁₇H₃₅.

De préférence, selon une seconde variante, le composé de formule générale (II) est choisi parmi ceux de formule (IIB) :

R-CONH-R' (IIB)

dans laquelle R et R' ont la même définition que ci-dessus.

Avantageusement, selon cette variante, la somme des nombres des atomes de carbone de R et R' est supérieur ou égal à 10, avantageusement supérieur ou égal à 14, de préférence supérieur ou égal à 18.

Encore plus avantageusement, selon cette variante, le nombre des atomes de carbone de R est supérieur ou égal à 10, avantageusement supérieur ou égal à 12, de préférence supérieur ou égal à 14, et R' = H.

Avantageusement, le composé de formule générale (II) est choisi parmi les dérivés hydrazides tels que les composés C₅H₁₁-CONH-NHCO-C₅H₁₁, C₉H₁₉-CONH-NHCO-C₉H₁₉, C₁₁H₂₃-CONH-NHCO-C₁₁H₂₃, C₁₇H₃₅-CONH-NHCO-C₁₇H₃₅, ou C₂₁H₄₃-CONH-NHCO-C₂₁H₄₃; les diamides telles que le N,N'-éthylènedi(laurylamide) de formule C₁₁H₂₃-CONH-CH₂-CH₂-NHCO-C₁₁H₃₁, le N,N'-éthylènedi(myristylamide) de formule C₁₃H₂₇-CONH-CH₂-CH₂-NHCO-C₁₃H₂₇, le N,N'-éthylènedi(palmitamide) de formule C₁₅H₃₁-CONH-CH₂-CH₂-NHCO-C₁₅H₃₁, le N,N'-éthylènedi(stéaramide) de formule C₁₇H₃₅-CONH-CH₂-CH₂-NHCO-C₁₇H₃₅ ; les mono amides telles que le laurylamide de formule C₁₁H₂₃-CONH₂, le myristylamide de formule C₁₃H₂₇-CONH₂, le palmitamide de formule C₁₅H₃₁-CONH₂, le stéaramide de formule C₁₇H₃₅-CONH₂.

De façon encore plus avantageuse, le composé de formule générale (II) est le N,N'-éthylènedi(stéaramide) de formule C₁₇H₃₅-CONH-CH₂-CH₂-NHCO-C₁₇H₃₅.

De préférence, lorsque l'additif chimique est choisi parmi les composés organiques de formule (II), il est utilisé en combinaison avec au moins un autre additif chimique choisi parmi les composés organiques de formule (I), (III), (V), (VI) et (VII) et/ou les produits de réaction d'au moins un polyol en C3-C12 et d'au moins un aldéhyde en C2-C12, notamment ceux comprenant un groupement de formule (IV).

Selon une troisième variante de ce mode de réalisation, le composé organique est un composé de formule (III) :

(R-NHCO)ₓ-Z-(NHCO-R')_{y} (III),

dans laquelle,
- R et R', identiques ou différents, contiennent une chaîne hydrocarbonée saturée ou insaturée, linéaire, ramifiée ou cyclique comprenant de 1 à 22 atomes de carbone, éventuellement substituée, et éventuellement comprenant des hétéroatomes, des cycles et/ou des hétérocycles,
- Z représente un groupement tri-fonctionnalisé choisi parmi les groupements suivants : 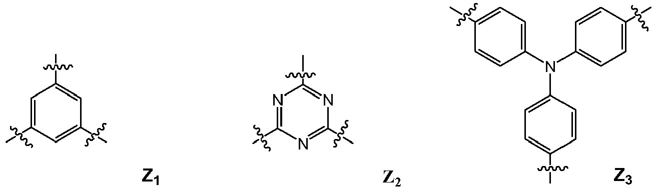
- x et y sont des entiers différents de valeur variant de 0 à 3 et tels que x+y=3.

De préférence, lorsque x est égal à 0 et Z représente Z₂, le composé de formule (III) est la N2, N4, N6-tridécylmélamine ayant la formule suivante avec R' représentant le groupe C₉H₁₉:

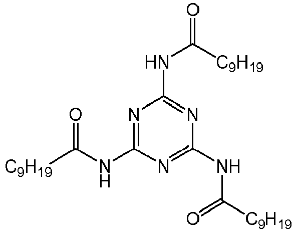

D'autres composés préférés répondant à la formule (III), sont tels que x est égal à 0, Z représente Z₂ et R' représente une chaîne hydrocarbonée saturée, linéaire, de 1 à 22 atomes de carbone, de préférence de 2 à 18 atomes de carbone, de préférence de 5 à 12 atomes de carbone.

D'autres composés préférés répondant à la formule (III) sont tels que : y est égal à 0 et Z représente Z₁, les composés ont alors pour formule : 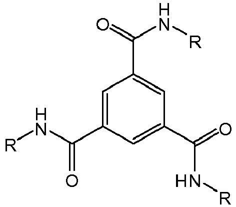 avec R choisi parmi les groupes suivants, pris seuls ou en mélanges :

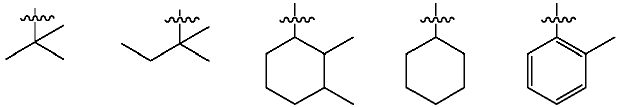

D'autres composés préférés répondant à la formule (III) sont tels que : y est égal à 0, Z représente Z₁ et R représente une chaîne hydrocarbonée saturée, linéaire, de 1 à 22 atomes de carbone, de préférence de 8 à 12 atomes de carbone.

Selon une quatrième variante de ce mode de réalisation, le composé organique est un produit de réaction d'au moins un polyol en C3-C12 et d'au moins un aldéhyde en C2-C12. Parmi les polyols utilisables, on peut citer le sorbitol, le xylitol, le mannitol et/ou le ribitol. De préférence, le polyol est le sorbitol.

Avantageusement, selon cette variante, le composé organique est un composé qui comprend au moins une fonction de formule générale (IV) :

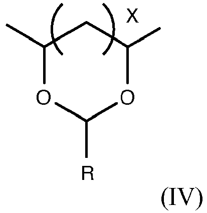

Avec :
- x est un entier,
- R est choisi parmi un radical alkyle, alcényle, aryle, ou aralkyle en C1-C11, éventuellement substitué par un ou plusieurs atomes d'halogène, un ou plusieurs groupements alcoxy en C1-C6

Le composé organique est avantageusement un dérivé du sorbitol. Par « dérivé du sorbitol », on entend tout produit de réaction, obtenu à partir du sorbitol. En particulier, tout produit de réaction obtenu en faisant réagir un aldéhyde avec du D-sorbitol. On obtient par cette réaction de condensation, des acétals de sorbitol, qui sont des dérivés du sorbitol. Le 1,3:2,4-Di-O-benzylidène-D-sorbitol est obtenu en faisant réagir 1 mole de D-sorbitol et 2 moles de benzaldéhyde et a pour formule :

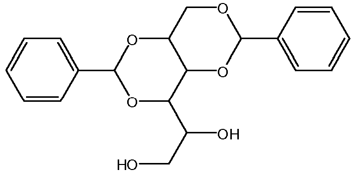

Les dérivés du sorbitol pourront ainsi être tous les produits de condensation d'aldéhydes, notamment d'aldéhydes aromatiques avec le sorbitol. On obtiendra alors des dérivés du sorbitol de formule générale : 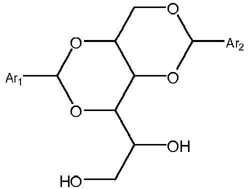 où Ar₁ et Ar₂ sont des noyaux aromatiques éventuellement substitués.

Parmi les dérivés du sorbitol, autre que le 1,3:2,4-Di-O-benzylidene-D-sorbitol on peut trouver par exemple le 1,3:2,4:5,6-tri-O-benzylidene-D-sorbitol, le 2,4-mono-O-benzylidene-D-sorbitol, le 1,3:2,4-bis(p-methylbenzylidene) sorbitol, 1,3:2,4-bis(3,4-dimethylbenzylidene) sorbitol, 1,3:2,4-bis(p-ethylbenzylidene) sorbitol, 1,3:2,4-bis(p-propylbenzylidene) sorbitol, 1,3:2,4-bis(p-butylbenzylidene) sorbitol, 1,3:2,4-bis(p-ethoxylbenzylidene) sorbitol, 1,3:2,4-bis(p-chlorobenzylidene) sorbitol, 1,3:2,4-bis(p-bromobenzylidene) sorbitol, 1,3:2,4-Di-O-methylbenzylidene-D-sorbitol, 1,3:2,4-Di-O-dimethylbenzylidene-D-sorbitol, 1,3:2,4-Di-O-(4-methylbenzylidene)-D-sorbitol, 1,3:2,4-Di-O-(4,3-dimethylbenzylidene)-D-sorbitol. De préférence, selon cette variante, le composé organique est le 1,3:2,4-Di-O-benzylidene-D-sorbitol.

Selon une cinquième variante de ce mode de réalisation, le composé organique est un composé de formule générale (V) :

R"-(COOH)_{z} (V),

dans laquelle R" représente une chaîne linéaire ou ramifiée, saturée ou insaturée comprenant de 4 à 68 atomes de carbone, de préférence de 4 à 54 atomes de carbone, plus préférentiellement de 4 à 36 atomes de carbone et z est un entier variant de 2 à 4.

De préférence, le groupement R" est de préférence, une chaîne linéaire saturée de formule C_{w}H_{2w} avec w un entier variant de 4 à 22, de préférence de 4 à 12.

Selon cette variante de l'invention, les composés organiques répondant à la formule (V) peuvent être des diacides (z = 2), des triacides (z = 3) ou des tétracides (z = 4). Les composés organiques préférés selon cette variante, sont des diacides avec z = 2.

De préférence, selon cette variante, les diacides ont pour formule générale HOOC-C_{w}H_{2w}-COOH avec w un entier variant de 4 à 22, de préférence de 4 à 12 et où z = 2 et R" = C_{w}H_{2w},

Avantageusement, selon cette variante, le composé organique est un diacide choisi parmi l'acide adipique ou acide 1,6-hexanedioïque avec w = 4, l'acide pimélique ou acide 1,7-heptanedioïque avec w = 5, l'acide subérique ou acide 1,8-octanedioïque avec w = 6, l'acide azélaique ou acide 1,9-nonanedioïque avec w = 7, l'acide sébacique ou acide 1,10-décanedioïque avec w = 8, l'acide undécanedioïque avec w = 9, l'acide 1,2-dodécanedioïque avec w = 10 ou l'acide tétradécanedioïque avec w = 12.

Les diacides peuvent aussi être des dimères diacides d'acide(s) gras insaturé(s) c'est-à-dire des dimères formés à partir d'au moins un acide gras insaturé, par exemple à partir d'un seul acide gras insaturé ou à partir de deux acides gras insaturés différents. Les dimères diacides d'acide(s) gras insaturé(s) sont classiquement obtenus par réaction de dimérisation intermoléculaire d'au moins un acide gras insaturé (réaction de Diels Alder par exemple). De préférence, on dimérise un seul type d'acide gras insaturé. Ils dérivent en particulier de la dimérisation d'un acide gras insaturé notamment en C₈ à C₃₄, notamment en C₁₂ à C₂₂, en particulier en C₁₆ à C₂₀, et plus particulièrement en C₁₈. Un dimère d'acide gras préféré est obtenu par dimérisation de l'acide linoléïque, celui-ci pouvant ensuite être partiellement ou totalement hydrogéné. Un autre dimère d'acide gras préféré a pour formule HOOC-(CH₂)₇-CH=CH-(CH₂)₇-COOH. Un autre dimère d'acide gras préféré est obtenu par dimérisation du linoléate de méthyle. De la même façon, on peut trouver des triacides d'acides gras et des tétracides d'acides gras, obtenus respectivement par trimérisation et tétramérisation d'au moins un acide gras.

Selon une sixième variante de ce mode de réalisation, le composé organique est un composé de formule générale (VI) : dans laquelle, 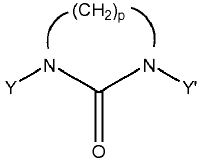
- les groupements Y et Y' représentent indépendamment l'un de l'autre, un atome ou groupement choisi parmi : H, -(CH₂)q-CH₃, -(CH₂)q-NH₂, -(CH₂)q-OH, -(CH₂)q-COOH ou 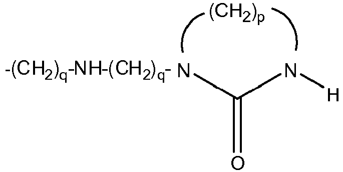 avec q un entier variant de 2 à 18, de préférence de 2 à 10, de préférence de 2 à 4 et p un entier supérieur ou égal à 2, de préférence ayant une valeur de 2 ou 3.

Parmi les composés organiques préférés répondant à la formule (VI), on peut citer les composés suivants :

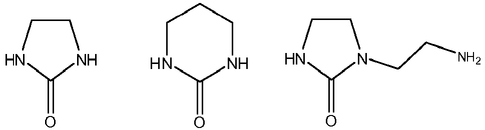

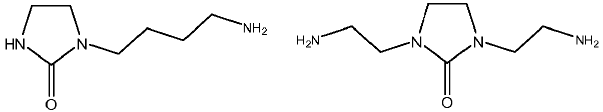

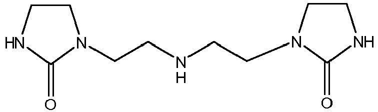

De préférence, selon cette variante, le composé organique de formule générale (VI) est :

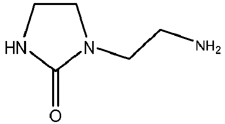

Selon une septième variante de ce mode de réalisation, le composé organique est un composé de formule générale (VII) :

R-NH-CO-CO-NH-R' (VII)

dans laquelle, R et R', identiques ou différents, représentent une chaîne hydrocarbonée saturée ou insaturée, linéaire, ramifiée ou cyclique, comprenant de 1 à 22 atomes de carbone, de préférence de 8 à 12 atomes de carbone, éventuellement substituée, et comprenant éventuellement des hétéroatomes, des cycles et/ou des hétérocycles.

Selon un autre mode de réalisation de l'invention, l'additif chimique est une paraffine. Les paraffines présentent des longueurs de chaînes de 30 à 120 atomes de carbone (C₃₀ à C₁₂₀). Les paraffines sont avantageusement choisies parmi les polyalkylènes. De préférence, on utilisera selon l'invention des paraffines de polyméthylène et des paraffines de polyéthylène. Ces paraffines pourront être d'origine pétrolière ou provenir de l'industrie chimique. Avantageusement, les paraffines utilisées sont des paraffines synthétiques issues de la conversion de la biomasse et/ou du gaz naturel.

De préférence, ces paraffines contiennent une grande proportion de paraffines dites « normales » c'est-à-dire de paraffines linéaires à chaîne droite, non ramifiées (hydrocarbures saturés). Ainsi, les paraffines peuvent comprendre de 50 à 100% de paraffines normales et de 0 à 50% d'isoparaffines et/ou de paraffines ramifiées. Plus préférentiellement, les paraffines comprennent de 85 à 95% de paraffines normales et de 5 à 15% d'isoparaffines et/ou de paraffines ramifiées. Avantageusement, les paraffines comprennent de 50 à 100% de paraffines normales et de 0 à 50% d'isoparaffines. Encore plus avantageusement, les paraffines comprennent de 85 à 95% de paraffines normales et de 5 à 15% d'isoparaffines.

De préférence, les paraffines sont des paraffines de polyméthylène. Plus particulièrement, les paraffines sont des paraffines synthétiques de polyméthylène, par exemple des paraffines issues de la conversion de gaz de synthèse par le procédé Fischer-Tropsch. Dans le procédé Fischer-Tropsch, les paraffines sont obtenues par réaction de l'hydrogène avec de l'oxyde de carbone sur un catalyseur métallique. Des procédés de synthèse Fischer-Tropsch sont décrits par exemple dans les publications EP 1 432 778, EP 1 328 607 ou EP 0 199 475.

Selon un autre mode de réalisation de l'invention, l'additif chimique est un acide polyphosphorique. Les acides polyphosphoriques (PPA) utilisables dans l'invention sont décrits dans WO 97/14753. Ce sont des composés de formule brute PqHrOs dans laquelle q, r et s sont des nombres positifs tels que :
q ≥ 2 et notamment q va de 3 à 20 ou plus et que 5q+r-2s=0.

En particulier, lesdits acides polyphosphoriques peuvent être des composés linéaires de formule brute P_{q}H_{(q+2)}O_{(3q+1)} correspondant à la formule développée :

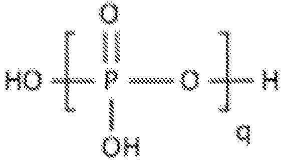

Où q a la définition donnée ci-dessus. Ils peuvent encore être des produits de structure bidimensionnelle ou tridimensionnelle.

Tous ces acides polyphosphoriques peuvent être considérés comme des produits de polycondensation par chauffage de l'acide métaphosphorique aqueux.

On ne sortira pas du cadre de l'invention en combinant plusieurs additifs chimiques différents tels que différents composés organiques de formule (I), (II), (III), (V), (VI) et (VII), les produits de réaction d'au moins un polyol en C3-C12 et d'au moins un aldéhyde en C2-C12, notamment ceux comprenant un groupement de formule (IV), et/ou différentes paraffines et/ou différents acides polyphosphoriques dans la base bitume.

Selon un mode de réalisation de l'invention, la base de bitume dont est composé le cœur des granules comprend de 0,1% à 10% en masse, de préférence de 0,5% à 5% en masse, plus préférentiellement de 0,5% à 2,8% en masse, et encore plus préférentiellement de 0,5% à 2,5% en masse d'additif chimique par rapport à la masse totale dudit cœur.

Selon un mode de réalisation avantageux, la base bitume comprend au moins deux additifs chimiques.

Selon une première variante de ce mode de réalisation, la base bitume comprend au moins un premier additif chimique de formule (V) et au moins un second additif chimique choisi parmi : les additifs chimiques de formule (I) ; les additifs chimiques de formule (II) ; les additifs chimiques de formule (III) ; les additifs chimiques de formule (V) ; les additifs chimiques de formule (VI) ; les additifs chimiques de formule (VII) et les produits de réaction d'au moins un polyol en C3-C12 et d'au moins un aldéhyde en C2-C12, notamment ceux comprenant un groupement de formule (IV), le second additif chimique étant distinct du premier additif chimique.

De préférence, et selon cette première variante, la base bitume comprend au moins un premier additif chimique de formule (V) et au moins un second additif chimique de formule (II).

Plus préférentiellement, et selon cette première variante, la base bitume comprend au moins un premier additif de formule (V) et au moins un second additif chimique de formule (IIA).

De préférence, et toujours selon cette première variante, le premier additif chimique de formule (V) est choisi parmi les diacides (z=2), les triacides (z=3) et les tétracides (z=4), de préférence parmi les diacides (z=2).

Plus préférentiellement, et toujours selon cette première variante, le premier additif chimique de formule (V) est choisi parmi l'acide adipique ou acide 1,6-hexanedioïque avec w = 4, l'acide pimélique ou acide 1,7-heptanedioïque avec w = 5, l'acide subérique ou acide 1,8-octanedioïque avec w = 6, l'acide azélaique ou acide 1,9-nonanedioïque avec w = 7, l'acide sébacique ou acide 1,10-décanedioïque avec w = 8, l'acide undécanedioïque avec w = 9, l'acide 1,2-dodécanedioïque avec w = 10 ou l'acide tétradécanedioïque avec w = 12.

Avantageusement, et selon cette première variante, le premier additif chimique de formule (V) est l'acide sébacique ou acide 1,10-décanedioïque avec w = 8.

Selon une seconde variante de ce mode réalisation, la base bitume comprend au moins un premier additif chimique de formule (II) et au moins un second additif chimique choisi parmi : les additifs chimiques de formule (I) ; les additifs chimiques de formule (II) ; les additifs chimiques de formule (III) ; les additifs chimiques de formule (V) ; les additifs chimiques de formule (VI) ; les additifs chimiques de formule (VII) et les produits de réaction d'au moins un polyol en C3-C12 et d'au moins un aldéhyde en C2-C12, notamment ceux comprenant un groupement de formule (IV), le second additif chimique étant distinct du premier additif chimique.

De préférence, et selon cette seconde variante, le premier additif chimique de formule (II) est choisi parmi les additifs chimiques de formule (IIA).

Plus préférentiellement, et selon cette seconde variante, la base bitume comprend au moins un premier additif chimique de formule (IIA) et au moins un second additif chimique choisi parmi : les additifs chimiques de formule (I) ; les additifs chimiques de formule (IIB) ; les additifs chimiques de formule (III) ; les additifs chimiques de formule (V) ; les additifs chimiques de formule (VI) ; les additifs chimiques de formule (VII) et les produits de réaction d'au moins un polyol en C3-C12 et d'au moins un aldéhyde en C2-C12, notamment ceux comprenant un groupement de formule (IV), le second additif chimique étant distinct du premier additif chimique.

Encore plus préférentiellement, et selon cette seconde variante, la base bitume comprend au moins un premier additif de formule (IIA) et au moins un second additif chimique de formule (V).

Avantageusement, et selon cette seconde variante, le premier additif chimique de formule (II) est le N,N'-éthylènedi(stéaramide).

De préférence, et selon cette seconde variante, le second additif chimique de formule (V) est choisi parmi l'acide adipique ou acide 1,6-hexanedioïque avec w = 4, l'acide pimélique ou acide 1,7-heptanedioïque avec w = 5, l'acide subérique ou acide 1,8-octanedioïque avec w = 6, l'acide azélaique ou acide 1,9-nonanedioïque avec w = 7, l'acide sébacique ou acide 1,10-décanedioïque avec w = 8, l'acide undécanedioïque avec w = 9, l'acide 1,2-dodécanedioïque avec w = 10 ou l'acide tétradécanedioïque avec w = 12.

Selon une troisième variante préférée de ce mode de réalisation, la base bitume comprend au moins de l'acide sébacique ou acide 1,10-décanedioïque et au moins du N,N'-éthylènedi(stéaramide).

Selon une quatrième variante de ce mode de réalisation, la base bitume comprend au moins un premier additif de formule (I) et au moins un second additif chimique choisi parmi : les additifs chimiques de formule (I) ; les additifs chimiques de formule (II) ; les additifs chimiques de formule (III) ; les additifs chimiques de formule (V) ; les additifs chimiques de formule (VI) ; les additifs chimiques de formule (VII) et les produits de réaction d'au moins un polyol en C3-C12 et d'au moins un aldéhyde en C2-C12, notamment ceux comprenant un groupement de formule (IV), le second additif chimique étant distinct du premier additif chimique.

De préférence, et selon cette quatrième variante, le second additif chimique est choisi parmi les additifs chimiques de formule (II) et les additifs chimiques de formule (V).

De préférence, et selon cette quatrième variante, le second additif chimique de formule (II) est choisi parmi les additifs chimiques de formule (IIA).

Plus préférentiellement, et selon cette quatrième variante, le second additif chimique de formule (II) est le N,N'-éthylènedi(stéaramide).

De préférence, et toujours selon cette quatrième variante, le second additif chimique de formule (V) est choisi parmi les diacides (z=2), les triacides (z=3) et les tétracides (z=4), de préférence parmi les diacides (z=2).

Encore plus préférentiellement, et toujours selon cette quatrième variante, le second additif chimique de formule (V) est choisi parmi l'acide adipique ou acide 1,6-hexanedioïque avec w = 4, l'acide pimélique ou acide 1,7-heptanedioïque avec w = 5, l'acide subérique ou acide 1,8-octanedioïque avec w = 6, l'acide azélaique ou acide 1,9-nonanedioïque avec w = 7, l'acide sébacique ou acide 1,10-décanedioïque avec w = 8, l'acide undécanedioïque avec w = 9, l'acide 1,2-dodécanedioïque avec w = 10 ou l'acide tétradécanedioïque avec w = 12.

Avantageusement, et toujours selon cette quatrième variante, le second additif chimique de formule (V) est l'acide sébacique ou acide 1,10-décanedioïque.

De préférence, et selon cette quatrième variante, le premier additif chimique de formule (I) est le 2',3-bis[(3-[3, 5-di-*tert*-butyl-4-hydroxyphenyl]propionyl)]propionohydrazide.

De préférence, et selon ce mode de réalisation, le ratio massique du premier additif chimique par rapport au second additif chimique est de 1 :99 à 99 : 1, de préférence de 1 :9 à 9 : 1, encore plus préférentiellement de 1 :5 à 5 : 1.

Selon un mode de réalisation de l'invention, le cœur peut en outre comprendre au moins un adjuvant polymère oléfinique.

L'adjuvant polymère oléfinique est choisi, de préférence, dans le groupe consistant en (a) les copolymères éthylène/(méth)acrylate de glycidyle ; (b) les terpolymères éthylène/monomère A/monomère B et (c) les copolymères résultant du greffage d'un monomère B sur un substrat polymère.
(a) Les copolymères éthylène/(méth)acrylate de glycidyle sont, avantageusement, choisis parmi les copolymères statistiques ou séquencés, de préférence statistiques, d'éthylène et d'un monomère choisi parmi l'acrylate de glycidyle et le méthacrylate de glycidyle, comprenant de 50% à 99,7% en masse, de préférence de 60% à 95% en masse, plus préférentiellement 60% à 90% en masse d'éthylène.
(b) Les terpolymères sont, avantageusement, choisis parmi les terpolymères statistiques ou séquencés, de préférence statistiques, d'éthylène, d'un monomère A et d'un monomère B. Le monomère A est choisi parmi l'acétate de vinyle et les acrylates ou méthacrylates d'alkyle en C₁ à C₆.
   Le monomère B est choisi parmi l'acrylate de glycidyle et le méthacrylate de glycidyle. Les terpolymères éthylène/monomère A/monomère B comprennent de 0,5% à 40% en masse, de préférence de 5% à 35% masse, plus préférentiellement de 10% à 30% en masse de motifs issus du monomère A et, de 0,5% à 15% en masse, de préférence de 2,5% à 15% en masse de motifs issus du monomère B, le reste étant formé de motifs issus de l'éthylène.
(c) Les copolymères résultent du greffage d'un monomère B choisi parmi l'acrylate de glycidyle et le méthacrylate de glycidyle, sur un substrat polymère. Le substrat polymère consiste en un polymère choisi parmi les polyéthylènes, notamment les polyéthylènes basse densité, les polypropylènes, les copolymères statistiques ou séquencés, de préférence statistiques, d'éthylène et d'acétate de vinyle et les copolymère statistiques ou séquencés, de préférence statistiques, d'éthylène et d'acrylate ou méthacrylate d'alkyle en C₁ à C₆, comprenant de 40% à 99,7% en masse, de préférence de 50% à 99% en masse d'éthylène. Lesdits copolymères greffés comprennent de 0,5% à 15% en masse, de préférence de 2,5% à 15% en masse de motifs greffés issus du monomère B.

Avantageusement, l'adjuvant polymère oléfinique est choisi parmi les terpolymères statistiques d'éthylène (b), d'un monomère A choisi parmi les acrylates ou méthacrylates d'alkyle en C₁ à C₆ et d'un monomère B choisi parmi l'acrylate de glycidyle et le méthacrylate de glycidyle, comprenant de 0,5% à 40% en masse, de préférence de 5% à 35% masse, plus préférentiellement de 10% à 30% en masse de motifs issus du monomère A et, de 0,5% à 15% en masse, de préférence de 2,5% à 15% en masse de motifs issus du monomère B, le reste étant formé de motifs issus de l'éthylène.

Selon un mode de réalisation de l'invention, la base de bitume dont est composé le cœur des granules comprend de 0,05% à 15% en masse, de préférence de 0,1% à 10% en masse, plus préférentiellement de 0,5% à 6% en masse de l'adjuvant polymère oléfinique par rapport à la masse totale dudit cœur.

Selon un mode de réalisation de l'invention, le noyau peut également comprendre d'autres additifs connus ou d'autres élastomères pour bitume connus tels que les copolymères SB (copolymère à blocs du styrène et du butadiène), SBS (copolymère à blocs styrène-butadiène-styrène), SIS (styrène-isoprène-styrène), SBS* (copolymère à blocs styrène-butadiène-styrène en étoile), SBR (styrène-b-butadiène-rubber), EPDM (éthylène propylène diène modifié). Ces élastomères peuvent en outre être réticulés selon tout procédé connu, par exemple avec du soufre. On peut également citer les élastomères réalisés à partir de monomères styrène et de monomères butadiène permettant une réticulation sans agent réticulant tels que décrits dans les documents WO2007/058994, WO2008/137394 et par la demanderesse dans la demande de brevet WO11/013073.

### - Procédé de fabrication des granules :

Un autre objet de l'invention concerne un procédé de fabrication de granules de bitume composées d'un cœur et d'une couche de revêtement du cœur, ce procédé comprenant :
i) la mise en forme du cœur à partir d'au moins une base bitume,
ii) le poudrage ou l'enrobage du cœur sur tout ou partie de sa surface respectivement par au moins un composé de silice pyrogénée ou par une composition comprenant au moins un composé de silice pyrogénée et au moins un solvant,
iii) optionnellement, le séchage des granules obtenues à l'étape ii) à une température allant de 20 à 60 °C, pendant une durée allant de 5 minutes à 5 heures, de préférence de 5 minutes à 2 heures.

De préférence, lorsque l'étape ii) est un poudrage, il est réalisé par farinage ou pulvérisation.

De préférence également, lorsque l'étape ii) est un enrobage, il est réalisé par trempage, pulvérisation, co-extrusion, etc.

La mise en forme du cœur des granules à partir d'une base bitume éventuellement additivée peut être réalisée selon tout procédé connu, par exemple selon le procédé de fabrication décrit dans le document US 3 026 568, le document WO 2009/153324 ou le document WO 2012/168380. Selon un mode de réalisation particulier, la mise en forme du cœur du bitume solide peut être réalisée par égouttage, en particulier à l'aide d'un tambour.

D'autres techniques peuvent être utilisées dans le procédé de fabrication du cœur de bitume solide, en particulier le moulage, le pastillage, l'extrusion...

De préférence, les particules de cœur de bitume solide présentent une dimension moyenne la plus longue allant de 1 à 30 mm, avantageusement de 5 à 20 mm.

De préférence, lors de la mise en œuvre du procédé de l'invention, le ratio en masse de la couche de revêtement par rapport à la masse de base bitume, éventuellement additivée, formant le cœur est de 0,1 à 1, avantageusement de 0,2 à 0,9.

Un autre objet de l'invention est des granules de bitume susceptibles d'être obtenues par la mise en œuvre du procédé selon l'invention tel que décrit ci-dessus. De telles granules de bitume présentent avantageusement les propriétés décrites ci-dessus.

### - Utilisations des granules de bitume :

Un autre objet de l'invention concerne également l'utilisation des granules de bitume selon l'invention tel que décrit ci-dessus comme liant routier.

Le liant routier peut être employé pour fabriquer des enrobés, en association avec des granulats selon tout procédé connu.

De préférence, les granules de bitume selon l'invention sont utilisées pour la fabrication d'enrobés.

Les enrobés bitumineux sont utilisés comme matériaux pour la construction et l'entretien des corps de chaussée et de leur revêtement, ainsi que pour la réalisation de tous travaux de voiries. On peut citer par exemple les enduits superficiels, les enrobés à chaud, les enrobés à froid, les enrobés coulés à froid, les graves émulsions, les couches de bases, de liaison, d'accrochage et de roulement, et d'autres associations d'un liant bitumineux et du granulat routier possédant des propriétés particulières, telles que les couches anti-orniérantes, les enrobés drainants, ou les asphaltes (mélange entre un liant bitumineux et des granulats du type du sable).

Un autre objet de l'invention concerne un procédé de fabrication d'enrobés comprenant au moins un liant routier et des granulats, le liant routier étant choisi parmi les granules de bitume selon l'invention, ce procédé comprenant au moins les étapes de :
- chauffage des granulats à une température allant de 100°C à 180°C, de préférence de 120°C à 160°C,
- mélange des granulats avec le liant routier dans une cuve telle qu'un malaxeur ou un tambour malaxeur,
- obtention d'enrobés.

Le procédé de l'invention présente l'avantage de pouvoir être mis en œuvre sans étape préalable de chauffage des granules de bitume solide.

Le procédé de fabrication d'enrobés selon l'invention ne requiert pas d'étape de chauffage des granules de bitume avant mélange avec les granulats car au contact des granulats chauds, les granules de bitume fondent.

Les granules de bitume selon l'invention telles que décrites ci-dessus présentent l'avantage de pouvoir être ajouté directement aux granulats chauds, sans avoir à être fondu préalablement au mélange avec les granulats chauds.

De préférence, l'étape de mélange des granulats et du liant routier est réalisée sous agitation, puis l'agitation est maintenue pendant au plus 5 minutes, de préférence au plus 1 minute pour permettre l'obtention d'un mélange homogène.

Les granules de bitume selon la présente invention sont remarquables en ce qu'elles permettent le transport et/ou le stockage et/ou la manipulation de bitume routier à température ambiante élevée dans des conditions extrêmes, en particulier sans qu'il y ait agglomération et/ou adhésion du bitume solide lors de son transport et/ou son stockage et/ou sa manipulation. Par ailleurs, la couche de revêtement des granules casse sous l'effet du contact avec les granulats chauds et du cisaillement et elle libère la base bitume. Enfin, la présence de la couche de revêtement dans le mélange de liant routier et de granulats ne dégrade pas les propriétés dudit bitume routier pour une application routière, comparativement à une base bitume non enrobée.

### - Procédé de transport et/ou de stockage et/ou de manipulation de bitume routier

Un autre objet de l'invention concerne également un procédé de transport et/ou de stockage et/ou de manipulation de bitume routier, ledit bitume routier étant transporté et/ou stocké et/ou manipulé sous forme de granules de bitume solides à température ambiante élevée, notamment à une température allant jusqu'à 100°C, avantageusement, de 20°C à 90°C, de préférence de 20°C à 80°C, plus préférentiellement de 40°C à 80°C, encore plus préférentiellement de 40°C à 60°C.

De préférence, le bitume routier est transporté et/ou stocké et/ou manipulé à une température ambiante élevée pendant une durée supérieure ou égale à 2 mois, préférence à 3 mois.

De préférence, la température ambiante élevée est une température allant jusqu'à 100°C, avantageusement, de 20°C à 90°C, de préférence de 20°C à 80°C, plus préférentiellement de 40°C à 80°C, encore plus préférentiellement de 40°C à 60°C.

Les granules de bitume selon l'invention présentent l'avantage de conserver leur forme divisée, et donc de pouvoir être manipulés, après un stockage et/ou un transport à une température ambiante élevée. Ils présentent en particulier la capacité de s'écouler sous leur propre poids sans fluer, ce qui permet leur stockage dans un conditionnement en sacs, en fûts ou en containers de toutes formes et de tous volumes puis leur transvasement depuis ce conditionnement vers un équipement, comme un équipement de chantier (cuve, mélangeur etc...).

Les granules de bitume sont, de préférence, transportés et/ou du stockés en vrac dans des sacs de 1 kg à 100 kg ou de 500 kg à 1000 kg couramment appelés dans le domaine des bitumes routiers des « Big Bag », lesdits sacs étant de préférence en matériau thermofusible. Ils peuvent également être transportés et/ou stockés en vrac dans des cartons de 5 kg à 30 kg ou dans des fûts de 100 kg à 200 kg.

Les différents modes de réalisation, variantes, les préférences et les avantages décrits ci-dessus pour chacun des objets de l'invention s'appliquent à tous les objets de l'invention et peuvent être pris séparément ou en combinaison.

L'invention est illustrée par les exemples suivants donnés à titre non limitatif.

### Exemples

### Matériel et méthodes

Les caractéristiques rhéologiques et mécaniques des bitumes auxquelles on fait référence dans ces exemples sont mesurées de la façon indiquée dans le tableau 1.

**Tableau 1**

| **Propriété** | **Abréviation** | **Unité** | **Norme de mesure** |
|---|---|---|---|
| Pénétrabilité à l'aiguille à 25°C | P₂₅ | 1/10 mm | NF EN 1426 |
| Température de ramollissement bille et anneau | TBA | °C | NF EN 1427 |

La variation de la température de ramollissement bille et anneau (TBA) est mesurée selon la norme NF EN 1427 de ladite composition entre l'échantillon extrait de la partie haute du tube d'échantillon et l'échantillon extrait de la partie basse du tube d'échantillon.

Les bases bitumes **B₂** et **B₃** sont préparées à partir :
- d'une base bitume de grade 35/50, notée **B₁**, ayant une pénétrabilité P₂₅ de 34 1/10 mm et une TBA de 52,6°C et disponible commercialement auprès du groupe TOTAL sous la marque AZALT® ;
- d'un copolymère séquencé styrène/butadiène/styrène (**SBS**), à 30,5% en poids de styrène et à 69,5% en poids de butadiène. La teneur en groupement 1,2-vinyle est de 27,8 % en poids par rapport au poids total de copolymère. Le copolymère a une masse moléculaire en poids (Mw) de 142 500 Daltons et un indice de polydispersité Iₚ de 1,09. Ce copolymère est disponible commercialement auprès de la société KRATON sous le nom D1192 ;
- de l'acide 1, 10 décanedioïque noté Additif **A1**;
- de la fleur de soufre, noté **réticulant** ;
- de l'octanoate de zinc ; noté **scavenger**.

Les quantités en pourcentage massique utilisées pour chaque bitume sont indiquées dans le tableau 2 ci-dessous.

**Tableau 2**

| **Bitume** | **B₂** | **B₃** |
|---|---|---|
| Base bitume **B₁** | 98,5% | 94,8% |
| Additif **A1** | 1,5% | 1,5% |
| SBS | - | 3,4% |
| Réticulant | - | 0,1% |
| Scavenger | - | 0,2% |
| P25 (1/10 mm) | 14 | 21 |
| TBA (°C) | 93 | 37 |

La quantité d'additifs pour chaque bitume est ajustée de manière à obtenir des bitumes ayant des propriétés mécaniques équivalentes, notamment une pénétrabilité P₂₅ et une TBA proches.

Les bitumes sont préparés de la manière suivante.

Pour le bitume **B₂**, on introduit la base bitume **B₁** dans un réacteur maintenu à 160°C sous agitation à 300 tours/min pendant deux heures. On introduit ensuite dans le réacteur l'acide. Le contenu du réacteur est maintenu à 160°C sous agitation à 300 tours/min pendant 1 heure.

Pour le bitume **B₃**, on introduit dans un réacteur maintenu à 185°C et sous agitation à 300 tours/min, la base bitume **B₁** et le copolymère SBS. Le contenu du réacteur est ensuite maintenu à 185°C sous agitation à 300 tours/min pendant 4 heures. On ajoute 0,1% de réticulant, on laisse réagir pendant 2h à 185°C sous agitation à 300 tours/min et on ajoute 0,2% de scavenger à 185°C sous agitation à 300 tours/min pendant 20 mn. On descend la température à 160°C sous agitation à 300 tours/min, puis on ajoute l'acide. Le mélange est agité pendant environ 1 heure à 160°C pour obtenir un aspect final homogène. Le mélange est refroidi à température ambiante.

### 1. Préparation des cœurs en bitume des granules de bitumes solides

Les cœurs de granules de bitume **G₁**, **G₂** et **G₃** sont préparés de manière respective à partir des bases bitumineuses **B₁**, **B₂** et **B₃** selon l'un des protocoles suivants.

### 1.1 Méthode générale pour la préparation des cœurs en bitume des granules selon l'invention

La base bitume **B₁**, **B₂** ou **B₃** est réchauffées à 160°C pendant deux heures à l'étuve avant d'être coulée dans un moule en silicone présentant différents trous de forme sphérique de façon à former les cœurs de bitume solide. Après avoir constaté la solidification du bitume dans le moule, le surplus est arasé avec une lame chauffée au bec bunsen. Après 30 minutes, le bitume solide sous forme de granules non enrobés est démoulé et stocké dans un plateau recouvert de papier siliconé. On laisse ensuite refroidir les cœurs en bitume à température ambiante pendant 10 à 15 minutes.

### 1.2 Méthode générale pour la préparation des cœurs en bitume des granules selon l'invention avec un procédé industriel

Pour la mise en œuvre de cette méthode, on peut utiliser un dispositif et un procédé tel que décrit de façon très détaillée dans le brevet US 4 279 579. Différents modèles de ce dispositif sont disponibles commercialement auprès de la société Sandvik sous le nom commercial de Rotoform.

Des granules de bitume **G₁**, **G₂** et **G₃** peuvent également être obtenues à partir de la composition bitumineuse **B₁**, **B₂** ou **B₃** versée dans le réservoir d'un tel dispositif et maintenues à une température comprise entre 130 et 270°C.

Une buse ou plusieurs buses d'injection permet(tent) le transfert de la composition de bitume **B₁**, **B₂** ou **B₃** à l'intérieur du double tambour de pastillation comportant un tambour externe rotatif, les deux tambours étant équipés de fentes, de buses et d'orifices permettant la pastillation de gouttes de bitume au travers du premier tambour fixe et des orifices présentant un diamètre compris entre 2 et 10 mm du tambour externe rotatif. Les gouttes de bitume sont déposées sur la face supérieure d'une bande de roulement, horizontale, entrainée par des rouleaux.

### 2. Méthode générale pour la préparation des granules de bitume solide selon l'invention comprenant une couche de revêtement

Les granules de bitume obtenus selon les méthodes 1.1 et 1.2 sont laissées à température ambiante pendant 10 à 15 minutes. Les granules ainsi formés sont recouverts à leur surface d'un composé anti-agglomérant, puis passées au tamis afin d'enlever l'excédent de composé anti-agglomérant.

Les granules de bitume **G₁**', comparatifs, et **G₂'** et **G₃'** selon l'invention sont préparés respectivement à partir des granules de bitume **G₁**, **G₂** et **G₃** selon la méthode décrite ci-dessus en utilisant comme composé anti-agglomérant de la silice pyrogénée, disponible commercialement sous la référence AEROSIL®200.

Le pourcentage massique de l'enrobage pour les granules **G₁'**, **G₂'** et **G₃'** est d'environ 1% en masse par rapport à la masse totale du bitume des granules.

### 3. Mesure de la résistance au stockage des granules

### Essai de résistance à la charge des granules :

Cet essai est mis en œuvre afin d'évaluer la résistance à la charge des granules de bitume préparés ci-dessus à une température de 65°C sous un effort en compression. En effet, cet essai permet de simuler les conditions de température et de compression des granules les uns sur les autres auxquelles ils sont soumis lors du transport et/ou du stockage en vrac dans des sacs de 10 à 100 kg ou dans des Big Bag de 500 à 1000 kg ou dans des fûts de 200 kg et d'évaluer leur résistance dans ces conditions.

L'essai de résistance à la charge est réalisé selon le protocole suivant : 5 mL de granules sont placés dans une seringue de 20 mL puis le piston est placé sur les granules ainsi qu'une masse de 208g, représentant une force appliquée comme dans un Big Bag. Le tout est placé à l'étuve à 65°C pendant au moins 4 heures. Les observations sont répertoriées dans le tableau 3 ci-dessous.

**Tableau 3**

| **Granules** | **G₁** | **G₁'** | **G₂** | **G₂'** | **G₃** | **G₃'** |
|---|---|---|---|---|---|---|
| Tenue à température ambiante à 65°C | -- | - | + | +++ | + | +++ |

| | | | | | | |
|---|---|---|---|---|---|---|
| +++ : les granules conservent leur forme initiale et n'adhèrent pas entre eux. ++ : les granules n'adhérent pas entre eux mais sont légèrement déformés. + : les granules adhèrent légèrement entre eux. - : les granules sont partiellement fondus. -- : les granules sont fondus. | | | | | | |

Les granules **G₂'** et **G₃'** selon l'invention présentent une très bonne résistance à une température ambiante de 65°C dans la mesure où ils conservent leur forme initiale et n'adhèrent pas entre eux. Ainsi, la manipulation et le transport/stockage desdites granules **G₂'** et **G₃'** seront aisés dans la mesure où les granules ne fondent pas et ne s'agglomèrent pas entre eux à température ambiante élevée.

## Revendications

1. Granules de bitume comprenant un cœur et une couche de revêtement dans lesquels :
- le cœur comprend au moins une base bitume et au moins un additif chimique choisi parmi : un composé organique, une paraffine, un acide polyphosphorique et leurs mélanges et,
- la couche de revêtement comprend au moins un composé de silice pyrogénée.

2. Granules selon la revendication 1, dans lesquels le composé de silice pyrogénée présente une surface spécifique comprise entre 25 et 420 m²/g, préférentiellement entre 90 et 330 m²/g, plus préférentiellement entre 120 et 280 m²/g.

3. Granules selon la revendication 1 ou 2, dans lesquels le composé de silice pyrogénée présente une taille moyenne de particules comprise entre 5 et 50 nm.

4. Granules selon l'une quelconque des revendications précédentes, dans lesquels le composé de silice pyrogénée présente un pH compris entre 3 et 10 lorsqu'il est en phase aqueuse.

5. Granules selon l'une quelconque des revendications précédentes, dans lesquels le composé de silice pyrogénée présente une teneur en carbone comprise entre 0,1 et 10% en poids par rapport au poids total du composé de silice pyrogénée.

6. Granules selon l'une quelconque des revendications précédentes, dans lesquels le composé de silice pyrogénée est une silice pyrogénée.

7. Granules selon l'une quelconque des revendications précédentes, dans lesquels le composé de silice pyrogénée est choisi parmi un composé de silice pyrogénée hydrophile, un composé de silice pyrogénée hydrophobe et leurs mélanges, de préférence un composé de silice pyrogénée hydrophile.

8. Granules selon l'une quelconque des revendications précédentes, dans lesquels la couche de revêtement comprend en outre au moins un autre composé anti-agglomérant.

9. Granules selon l'une quelconque des revendications précédentes, dans lesquels la base bitume présente une pénétrabilité à l'aiguille mesurée à 25°C selon la norme EN 1426 de 5 à 330 1/10 mm, de préférence de 20 à 220 1/10 mm.

10. Granules selon l'une quelconque des revendications 1 à 9 qui présentent une stabilité au transport et/ou au stockage et/ou à la manipulation à une température allant jusqu'à 100°C, avantageusement, de 20°C à 90°C, de préférence de 20°C à 80°C, plus préférentiellement de 40°C à 80°C, encore plus préférentiellement de 40°C à 60°C pendant une durée supérieure ou égale à 2 mois, de préférence supérieure ou égale à 3 mois.

11. Procédé de fabrication de granules de bitume selon l'une quelconque des revendications 1 à 10, ce procédé comprenant :
i) la mise en forme du cœur à partir d'au moins une base bitume,
ii) le poudrage ou l'enrobage du cœur sur tout ou partie de sa surface par au moins un composé de silice pyrogénée ou une composition comprenant au moins un composé de silice pyrogénée et un solvant,
iii) optionnellement, le séchage des granules obtenues à l'étape ii) à une température allant de 20 à 60 °C, pendant une durée allant de 5 minutes à 5 heures, de préférence de 5 minutes à 2 heures.

12. Utilisation des granules de bitume selon l'une quelconque des revendications 1 à 10 comme liant routier.

13. Utilisation selon la revendication 12 pour la fabrication d'enrobés.

14. Procédé de fabrication d'enrobés comprenant au moins un liant routier et des granulats, le liant routier étant choisi parmi les granules de bitume selon l'une quelconque des revendications 1 à 10, ce procédé comprenant au moins les étapes de :
- chauffage des granulats à une température allant de 100°C à 180°C, de préférence de 120°C à 160°C,
- mélange des granulats avec le liant routier dans une cuve telle qu'un malaxeur ou un tambour malaxeur,
- obtention d'enrobés.

15. Procédé de transport et/ou de stockage et/ou de manipulation de bitume routier, ledit bitume routier étant transporté et/ou stocké et/ou manipulé sous forme de granules de bitume selon l'une quelconque des revendications 1 à 10.

## Patentansprüche

1. Bitumenkörnchen, die einen Kern und eine Beschichtungslage umfassen, wobei:
- der Kern mindestens einen Bitumengrundstoff und mindestens ein chemisches Additiv umfasst, welches aus den folgenden ausgewählt ist: einer organischen Verbindung, einem Paraffin, einer Polyphosphorsäure und deren Mischungen, und
- die Beschichtungslage mindestens eine pyrogene Kieselsäureverbindung umfasst.

2. Körnchen nach Anspruch 1, wobei die pyrogene Kieselsäureverbindung eine spezifische Oberfläche im Bereich von 25 bis 420 m²/g, vorzugsweise von 90 bis 330 m²/g, insbesondere von 120 von 280 m²/g, aufweist.

3. Körnchen nach Anspruch 1 oder 2, wobei die pyrogene Kieselsäureverbindung eine mittlere Partikelgröße im Bereich von 5 bis 50 nm aufweist.

4. Körnchen nach einem beliebigen der vorhergehenden Ansprüche, wobei die pyrogene Kieselsäureverbindung einen pH-Wert im Bereich von 3 bis 10 aufweist, wenn sie in wässriger Phase vorliegt.

5. Körnchen nach einem beliebigen der vorhergehenden Ansprüche, wobei die pyrogene Kieselsäureverbindung einen Kohlenstoffgehalt im Bereich von 0,1 bis 10 Gewichts-% aufweist, bezogen auf das Gesamtgewicht der pyrogenen Kieselsäureverbindung .

6. Körnchen nach einem beliebigen der vorhergehenden Ansprüche, wobei es sich bei der pyrogenen Kieselsäureverbindung um eine pyrogene Kieselsäure handelt.

7. Körnchen nach einem beliebigen der vorhergehenden Ansprüche, wobei die pyrogene Kieselsäureverbindung aus einer hydrophilen pyrogenen Kieselsäureverbindung, einer hydrophoben pyrogenen Kieselsäureverbindung und deren Mischungen ausgewählt ist, wobei es sich vorzugsweise um eine hydrophile pyrogene Kieselsäureverbindung handelt.

8. Körnchen nach einem beliebigen der vorhergehenden Ansprüche, wobei die Beschichtungslage darüber hinaus mindestens ein weiteres Trennmittel umfasst.

9. Körnchen nach einem beliebigen der vorhergehenden Ansprüche, wobei der Bitumengrundstoff eine Nadelpenetration aufweist, die 5 bis 330 1/10 mm, vorzugsweise 20 bis 220 1/10 mm beträgt, wenn sie bei 25 °C gemäß der Norm EN 1426 gemessen wird.

10. Körnchen gemäß einem beliebigen der Ansprüche 1 bis 9, die bei einer Temperatur von bis zu 100 °C, vorteilhafterweise von 20 °C bis 90 °C, vorzugsweise von 20 °C bis 80 °C, stärker bevorzugt von 40 °C bis 80 °C, noch stärker bevorzugt von 40 °C bis 60 °C, über eine Dauer von mindestens 2 Monaten, vorzugsweise von mindestens 3 Monaten gegenüber Transport- und/oder Lagerungs- und/oder Handhabungsvorgängen stabil sind.

11. Verfahren zur Herstellung von Bitumenkörnchen nach einem beliebigen der Ansprüche 1 bis 10, wobei das Verfahren Folgendes umfasst:
i) Formen des Kerns aus mindestens einem Bitumengrundstoff,
ii) Pulverbeschichten oder Umhüllen des Kerns, auf der Gesamtheit oder auf einem Abschnitt seiner Oberfläche, mit mindestens einer pyrogenen Kieselsäureverbindung oder einer Zusammensetzung, die mindestens eine pyrogene Kieselsäureverbindung und ein Lösungsmittel umfasst,
iii) möglicherweise, Trocknen der Körnchen, wie sie in Schritt ii) erhalten wurden, bei einer Temperatur im Bereich von 20 bis 60 °C, über eine Dauer im Bereich von 5 Minuten bis 5 Stunden, vorzugsweise von 5 Minuten bis 2 Stunden.

12. Verwendung der Bitumenkörnchen nach einem beliebigen der Ansprüche 1 bis 10 als Bindemittel für den Straßenbau.

13. Verwendung nach Anspruch 12 zur Herstellung von Asphalt.

14. Verfahren zur Herstellung von Asphalt, welcher mindestens ein Bindemittel für den Straßenbau und Gesteinskörnungen umfasst, wobei das Bindemittel für den Straßenbau aus den Bitumenkörnchen nach einem beliebigen der Ansprüche 1 bis 10 ausgewählt ist, wobei das Verfahren zumindest die folgenden Schritte umfasst:
- Erhitzen der Gesteinskörnungen auf eine Temperatur im Bereich von 100 °C bis 180 °C, vorzugsweise von 120 °C bis 160 °C,
- Vermischen der Gesteinskörnungen mit dem Bindemittel für den Straßenbau in einem Behälter wie etwa einem Mischer oder einer Mischtrommel,
- Erhalten von Asphalt.

15. Verfahren zum Transport und/oder zur Lagerung und/oder zur Handhabung von Bitumen für den Straßenbau, wobei das Bitumen für den Straßenbau in Form von Bitumenkörnchen nach einem beliebigen der Ansprüche 1 bis 10 transportiert und/oder gelagert und/oder gehandhabt wird.

## Claims

1. A bitumen pellet comprising a core and a coating layer, in which:
- the core comprises at least one bitumen base and at least one chemical additive chosen from: an organic compound, a paraffin, a polyphosphoric acid, and mixtures thereof, and
- the coating layer comprises at least one fumed silica compound.

2. The pellet as claimed in claim 1, in which the fumed silica compound has a specific surface area of between 25 and 420 m²/g, preferentially between 90 and 330 m²/g, more preferentially between 120 and 280 m²/g.

3. The pellet as claimed in claim 1 or 2, in which the fumed silica compound has a mean particle size of between 5 and 50 nm.

4. The pellet as claimed in any one of the preceding claims, in which the fumed silica compound has a pH of between 3 and 10, when it is in the aqueous phase.

5. The pellet as claimed in any one of the preceding claims, in which the fumed silica compound has a carbon content of between 0.1% and 10% by weight, relative to the total weight of the fumed silica compound.

6. The pellet as claimed in any one of the preceding claims, in which the fumed silica compound is a fumed silica.

7. The pellet as claimed in any one of the preceding claims, in which the fumed silica compound is chosen from a hydrophilic fumed silica compound, a hydrophobic fumed silica compound and mixtures thereof, preferably a hydrophilic fumed silica compound.

8. The pellet as claimed in any one of the preceding claims, in which the coating layer also comprises at least one other anticaking compound.

9. The pellet as claimed in any one of the preceding claims, in which the bitumen base has a needle penetrability measured at 25°C according to standard EN 1426 of from 5 to 330 1/10 mm, preferably from 20 to 220 1/10 mm.

10. The pellet as claimed in any one of claims 1 to 9, which shows stability on transportation and/or storage and/or handling at a temperature ranging up to 100°C, advantageously from 20°C to 90°C, preferably from 20°C to 80°C, more preferentially from 40°C to 80°C, even more preferentially from 40°C to 60°C, for a period of greater than or equal to 2 months, preferably greater than or equal to 3 months.

11. A process for manufacturing bitumen pellets as claimed in any one of claims 1 to 10, this process comprising:
i) forming of the core from at least one bitumen base,
ii) dusting or coating of the core over all or part of its surface, with at least one fumed silica compound or a composition comprising at least one fumed silica compound and a solvent,
iii) optionally, drying of the pellets obtained in step ii) at a temperature ranging from 20 to 60°C, for a period ranging from 5 minutes to 5 hours, preferably from 5 minutes to 2 hours.

12. The use of the bitumen pellets as claimed in any one of claims 1 to 10, as a road binder.

13. The use as claimed in claim 12, for manufacturing bitumen mixes.

14. A process for manufacturing bitumen mixes comprising at least one road binder and aggregates, the road binder being chosen from the bitumen pellets as claimed in any one of claims 1 to 10, this process comprising at least the steps of:
- heating the aggregates at a temperature ranging from 100°C to 180°C, preferably from 120°C to 160°C,
- mixing the aggregates with the road binder in a tank such as a mixer or a mixing drum,
- obtaining bitumen mixes.

15. A process for transporting and/or storing and/or handling road bitumen, said road bitumen being transported and/or stored and/or handled in the form of bitumen pellets as claimed in any one of claims 1 to 10.
